# EUROPEAN PATENT SPECIFICATION

(11) **EP 2 524 817 B1**
(45) Date of publication and mention of the grant of the patent: **15.07.2015**
(21) Application number: 12154123.9
(22) Date of filing: 06.02.2012
(51) Int. Cl.: B29C 70/42, B29C 70/88, B60B 21/06, B60B 21/08, B60B 5/02, B29L 31/32

(54) **Wheel rim for bicycle and producing method of producing the same**
Radfelge für Fahrrad und Herstellungsverfahren zum Herstellen davon
Jante de roue de bicyclette et procédé de production de la production de celle-ci

(30) Priority: 20.05.2011 TW 100117793
(43) Date of publication of application: 21.11.2012
(73) Proprietor: Carbotec Industrial Co., Ltd, 407 Taichung (TW)
(72) Inventor: Lee, Michael, 407 Taichung City (TW)
(74) Representative: Lang, Christian

(56) References cited:
- WO-A1-2009/045429
- DE-A1- 10 006 151
- DE-A1-102005 053 799
- DE-B3-102009 038 459
- US-A1- 2007 131 499

## Description

### BACKGROUND OF THE INVENTION

### Field of the Invention

The present invention relates to a wheel rim for bicycle and a producing method thereof.

### Description of the Prior Art

Bicycle is generally utilized for exercising or transporting. To minimize weight of bicycle, carbon fiber composite material is widely used in bicycle manufacturing. In addition, structure strength of bicycle is also benefited from such material choosing. Deservedly, carbon fiber composite material is also used for producing wheel rim.

However, carbon fiber wheel rim has to be used with unique brake pads avoiding abrasion caused by metal ingredient contained in the brake pads.

Additionally, carbon fiber wheel rim could be easily deformed in high temperature caused by friction between brake pads and itself. Thus, user would be anxious about unexpected deformation of the wheel rim.

Closest prior art document DE 10 2005 053 799 Al discloses a rim and a method for manufacturing a rim and a wheel. A rim for tube tires for bicycles comprises a rim body with a rim base and lateral brake sidewalls. Said brake sidewalls are provided at the rim flanges, each comprising a brake layer which is integrated with the brake sidewalls. The rim consists entirely of a fibrous composite material, which in this case contains a thermoplastic matrix material. The surfaces of the brake layers on the brake sidewalls of the rim body have embedded in them glass and silica sand particles received and retained in the thermoplastic matrix material.

WO 2009/045429 A1 discloses a vehicular wheel, comprising an organic polymer composition, which is coated at least in part by a metal.

DE 100 06 151 A1 discloses a coating layer formed directly on a substrate via sputtering.

To overcome the high temperature problem, carbon fiber wheel rim may be formed with apertures to increase heat dissipation efficiency. However, problems are then raised in structure strength and exterior appearance.

The present invention is, therefore, arisen to obviate or at least mitigate the above mentioned disadvantages.

### SUMMARY OF THE INVENTION

The main object of the present invention is to provide a carbon fiber wheel rim which is able to resist deformation caused be friction and high temperature.

To achieve the above and other objects, a wheel rim for bicycle of the present invention includes a circular carbon fiber main body and two strengthen layers.

The circular carbon fiber main body has a circular inner surface, a circular outer surface, and two circular side surfaces each of which connects the inner surface to the outer surface. The strengthen layers are made of metal, and are attached to the side surfaces by means of electroplating respectively.

The wheel rim can be produced by the steps including modeling, grinding, and electroplating.

Said modeling is to produce the circular carbon fiber main body of the wheel rim by heating and pressing carbon fiber and resin. The main body has the inner surface, the outer surface, and the side surfaces.

Said grinding is to grind the side surfaces, so that resin on the side surfaces of the main body is partially removed.

Said electroplating is to attach two metal layers to the surfaces grinded in the grinding step by means of electroplating, so that the strengthen layers are provided to the main body.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram showing a first embodiment of the present invention;
Fig. 2 is a partial stereogram showing a cut off wheel rim of a first embodiment of the present invention;
Fig. 3 is a profile showing a first embodiment of the present invention;
Fig. 3A is a partial enlargement drawing of Fig. 3;
Fig. 4 is an enlarged profile showing a second embodiment of the present invention.

### DETAILED DESCRIPTION OF THE PREFERRED EMBODIMENTS

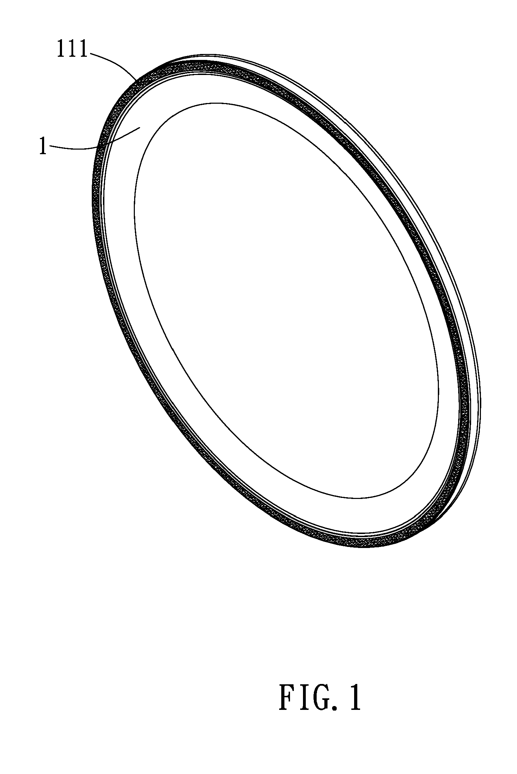

Please refer to Fig. 1 to Fig. 3 for a first embodiment of the present invention. The wheel rim for bicycle of the present embodiment includes a circular carbon fiber main body 1 and two strengthen layers 111.

The carbon fiber main body 1 has a circular inner surface 13, a circular outer surface 12, and two circular side surfaces 11 each of which connects the inner surface 13 to the outer surface 12. The side surfaces 11 are prepared for brake pads to press thereon. The carbon fiber main body 1 mentioned here is not literally means that the main body is made of only carbon fiber. To solidify carbon fiber, resin and/or other suitable material should be added in composition of the main body.

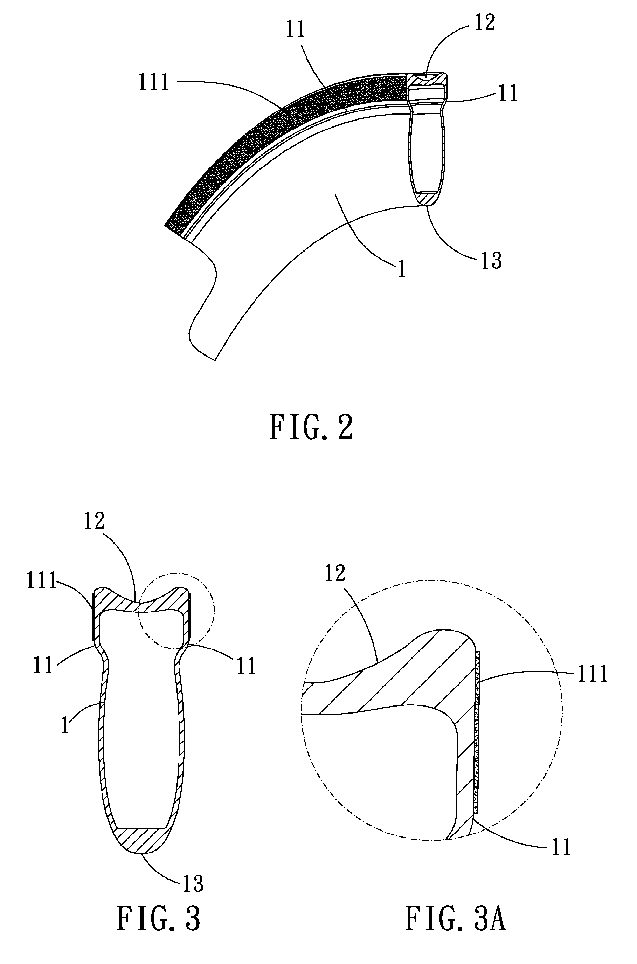

The strengthen layers 111 are made of metal. The strengthen layers 111 are attached to the side surfaces be means of electroplating respectively, as shown in Fig. 3A. Thus, brake pads may actually press and abut on the strengthen layers 111. Preferably, the strengthen layers 111 extend along the side surfaces 11, formed circularly. To obtain preferable mechanical or chemical properties, the strengthen layers 111 may be made of nickel, copper, or chromium.

To producing the wheel rim mentioned above, a producing method is here provided in the steps including modeling, grinding, and electroplating.

Said modeling is to produce the circular carbon fiber main body 1 by heating and pressing carbon fiber and resin. For modeling, suitable model and material, such as woven carbon fiber, should be prepared in advance.

Said grinding is to grind the side surfaces of the main body produced from the modeling step. After grinding, resin on the side surfaces of the main body is partially removed, so that carbon fiber is exposed outwardly. It should be noted that even the side surfaces of the main body are riddled with carbon fiber, resin is still exposed on the grinded surfaces as lines or grains.

Said electroplating is to attach two metal layers to the surfaces grinded in the grinding step by means of electroplating. The strengthen layers 111 are then provided to the main body 1. In some possible embodiments of the present invention, the whole main body may be electroplated, so that metal would attach to the ungrinded surfaces, including the inner surface and the outer surface. The additional metal may bring user a special appearance. In the present embodiment, metal can be ensured attaching to only the grinded surfaces by coating resin before or after grinding. Thus, ungrinded surfaces are covered by resin, and are nonconductive to which the metal can not attach by electroplating.

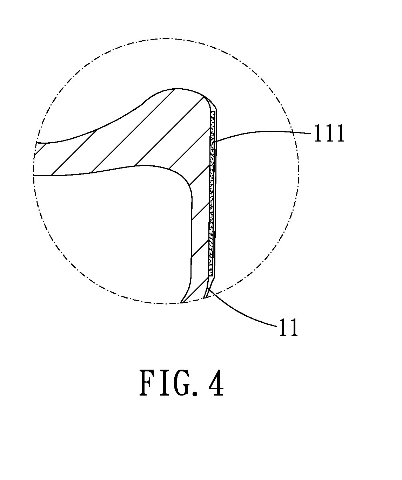

After electroplating, the side surfaces and the strengthen layers may be further coated by resin, as shown in Fig. 4. The surfaces of the wheel rim are then smoothened. Thus, an attractive appearance is prepared for the wheel rim, and disjunction of the strengthen layers is avoided.

As mentioned before, the grinded surfaces are shown up with lines or grains of resin. In electroplating step, metal can attach to surfaces where the carbon fiber is exposed. The other area of the surfaces where the resin is exposed can not be attached by metal. Therefore, the strengthen layers would be formed with porous surfaces or grooved surfaces away from the main body since that resin is nonconductive. However, the porous surface or grooved surface is not shown in figures because the pores and the grooves are small in scale and are probably filled by metal debris flaked in the electroplating step.

To facilitating electroplating, conductive layers, such as conductive paste, may be coated on the surfaces grinded in the grinding step before electroplating. It should be noted that even the grinded surfaces are coated with conductive layers, the strengthen layers are still formed with uneven surface because of conductivity difference caused by distribution of carbon fiber and resin.

To conclude, the wheel rim of the present invention is provided with strengthen layers which is attached to the main body by electroplating. Thus, the strengthen layers has porous or grooved surfaces. Heat dissipation efficiency is increased.

In addition, the strengthen layers is made of metal. Thus, heat generated by friction can be dispersed by heat conduction. Heat dissipation efficiency is then further increased.

Moreover, the wheel rim can cooperate with general brake pads which may contain metal ingredient. Limitation of composition of brake pads is relieved.

Accordingly, the wheel rim is deformation resistant, abrasion resistant, and durable.

## Claims

1. A wheel rim for bicycle, comprising:
a circular carbon fiber main body (1), having a circular inner surface (13), a circular outer surface (12), and two circular side surfaces (11) each of which connects the inner surface (13) to the outer surface (12), the main body (1) including carbon fibers and resin encapsulating the carbon fibers;
two strengthen layers (111) which are made of metal, attached to the side surfaces (11) by means of electroplating respectively,
wherein at least a part of the carbon fibers are exposed on the side surfaces (11), and the two strengthen layers (111) are attached to the exposed carbon fibers on the side surfaces (11).

2. The wheel rim of claim 1, wherein each of the strengthen layers (111) has an outer grooved surface remote from the main body (1).

3. The wheel rim of claim 1, wherein each of the strengthen layers (111) is circular.

4. The wheel rim of claim 1, wherein each of the strengthen layers (111) is made of nickel.

5. A producing method of producing the wheel rim of claim 1, comprising the following steps:
modeling: producing the circular carbon fiber main body (1) of the wheel rim by heating and pressing carbon fiber and resin, the resin encapsulating the carbon fibers, the main body (1) having the inner surface (13), the outer surface (12), and the side surfaces (11);
grinding: grinding the side surfaces (11), so that resin on the side surfaces (11) of the main body (1) is partially removed;
at least part of the carbon fibers being exposed on the side surfaces (11) after grinding;
electroplating: attaching two metal layers to the exposed carbon fibers on the surfaces grinded in the grinding step by means of electroplating, so that the strengthen layers (111) are provided to the main body (1).

6. The producing method of claim 5, wherein the surfaces grinded in the grinding step are coated with conductive layers before electroplating, so that the electroplating step is facilitated.

7. The producing method of claim 5, wherein resin is coated to the side surfaces (11) and the strengthen layers (111) after electroplating, so that surfaces of the wheel rim are smoothened.

## Patentansprüche

1. Felge für Fahrräder, die umfasst:
einen ringförmigen Karbonfaserhauptkörper (1), der eine ringförmige Innenfläche (13) und eine ringförmige Außenfläche (12) und zwei ringförmige Seitenflächen (11) aufweist, von denen jede die ringförmige Innenfläche (13) mit der ringförmigen Außenfläche (12) verbindet, wobei der Hauptkörper (1) Karbonfasern und Harz, das die Karbonfasern einschließt, umfasst,
zwei Verstärkungsschichten (111), die aus Metall gefertigt und jeweils mittels Elektroplattieren an den Seitenflächen (11) ausgebildet sind,
wobei mindestens ein Teil der Karbonfasern an den Seitenflächen (11) freigelegt sind, und wobei die zwei Verstärkungsschichten (111) an den freigelegten Karbonfasern an den Seitenflächen angeordnet sind.

2. Felge nach Anspruch 1, wobei jede der Verstärkungsschichten (111) eine gerillte Außenfläche aufweist, die vom Hauptkörper (1) abgewandt ist.

3. Felge nach Anspruch 1, wobei jede der Verstärkungsschichten (111) kreisförmig ist.

4. Felge nach Anspruch 1, wobei jede der Verstärkungsschichten (111) aus Nickel gefertigt ist.

5. Fertigungsverfahren zur Herstellung der Felge nach Anspruch 1, das folgende Schritte umfasst:
Modellieren: Fertigen des ringförmigen Karbonfaserhauptkörpers (1) der Felge durch Erhitzen und Pressen von Karbonfasern und Harz, wobei der Harz die Karbonfasern einschließt, wobei der Hauptkörper (1) die Innenfläche (13), die Außenfläche (12) und die Seitenflächen (11) aufweist,
Schleifen: Schleifen der Seitenflächen (11), sodass Harz an den Seitenflächen (11) des Hauptkörpers (1) teilweise entfernt wird,
wobei nach dem Schleifen mindestens ein Teil der Karbonfasern an den Seitenflächen (11) freigelegt ist,
Elektroplattieren: Anbringen zweier Metallschichten mittels Elektroplattieren an den freigelegten Karbonfasern an den Seitenflächen, die im Schleifschritt geschliffen worden sind, sodass die Verstärkungsschichten (111) am Hauptkörper (1) angeordnet sind.

6. Fertigungsverfahren nach Anspruch 5, wobei die Flächen, die im Schleifschritt geschliffen worden sind, vor dem Elektroplattieren mit leitfähigen Schlichten beschichtet werden, sodass das Elektroplattieren erleichtert wird.

7. Fertigungsverfahren nach Anspruch 5, wobei nach dem Elektroplattieren Harz an den Seitenflächen (11) und den Verstärkungsschichten (111) aufgetragen wird, sodass Oberflächen der Felge geglättet werden.

## Revendications

1. Jante de bicyclette comprenant :
un corps principal circulaire en fibre de carbone (1) ayant une surface intérieure circulaire (13), une surface extérieure circulaire (12) et deux surfaces latérales circulaires (11), chacune d'elles reliant la surface intérieure (13) à la surface extérieure (12), le corps principal (1) comprenant des fibres de carbone et de la résine qui enrobe les fibres de carbone ;
deux couches de renforcement (111) qui sont en métal, attachées aux surfaces latérales (11) respectivement au moyen de galvanoplastie,
au moins une partie des fibres de carbones étant apparentes sur les surfaces latérales (11) et les deux couches de renforcement (111) étant attachées aux fibres de carbone apparentes sur les surfaces latérales (11).

2. Jante selon la revendication 1, chacune des couches de renforcement (111) ayant une surface cannelée extérieure éloignée du corps principal (1).

3. Jante selon la revendication 1, chacune des couches de renforcement (111) étant circulaire.

4. Jante selon la revendication 1, chacune des couches de renforcement (111) étant en nickel.

5. Procédé de production pour produire la jante selon la revendication 1 comprenant les étapes suivantes :
modelage : production du corps principal circulaire en fibre de carbone (1) de la jante en chauffant et en pressant des fibres de carbone et de la résine, la résine enrobant les fibres de carbone, le corps principal (1) ayant la surface intérieure (13), la surface extérieure (12) et les surfaces latérales (11) ;
meulage : meulage des surfaces latérales (11) si bien que la résine sur les surfaces latérales (11) du corps principal (1) est partiellement enlevée,
au moins une partie des fibres de carbone étant apparente sur les surfaces latérales (11) après meulage,
galvanoplastie : fixation de deux couches de métal sur les fibres de carbone apparentes sur les surfaces meulées à l'étape de meulage au moyen de galvanoplastie si bien que les couches de renforcement (111) sont prévues sur le corps principal (1).

6. Procédé de production selon la revendication 5, les surfaces meulées à l'étape de meulage étant revêtues de couches conductrices avant galvanoplastie si bien que l'étape de galvanoplastie est facilitée.

7. Procédé de production selon la revendication 5, la résine étant revêtue sur les surfaces latérales (11) et les couches de renforcement (111) après galvanoplastie si bien que les surfaces de la jante sont égalisées.
